# FASCICULE DE BREVET EUROPEEN

(11) **EP 0 627 592 B1**
(45) Date de publication et mention de la délivrance du brevet: **08.01.1997**
(21) Numéro de dépôt: 94401019.8
(22) Date de dépôt: 09.05.1994
(51) Int. Cl.: F16L 37/084, F16L 37/088

(54) **Connexion rapide**
Schnellkupplung
Quick coupling

(30) Priorité: 10.05.1993 FR 9305558
(43) Date de publication de la demande: 07.12.1994
(73) Titulaire: Etablissements CAILLAU, F-92130 Issy-les-Moulineaux (FR)
(72) Inventeur: Calmettes, Lionel, F-23220 Bonnat (FR); Detable, Pascal, F-41130 Villedieu (FR)
(74) Mandataire: Descourtieux, Philippe

(56) Documents cités:
- EP-A- 0 448 277
- EP-A- 0 484 690
- EP-A- 0 511 891
- GB-A- 2 216 213
- US-A- 4 915 420

## Description

On connaît déjà, par exemple par les demandes publiées EP-A-484 690, 491 304 et 511 891 ou par le brevet US-A-4.875.715, divers types de connexion rapide d'un tube rigide susceptible d'être emmanché dans un embout pour y être verrouillé axialement. Ces connexions sont de plus en plus utilisées dans les fabrications de grande série, notamment dans la construction automobile. Elles permettent un montage facile des conduits, tels que les canalisations de combustible ou de refroidissement, véhiculant des fluides, éventuellement à température élevée.

Toutefois, les connexions connues, tout en donnant satisfaction sur le plan technique, comportent en général un nombre d'éléments relativement élevé dont l'assemblage et le montage entraînent par conséquent un prix de revient quelquefois prohibitif. En outre ces connexions ne peuvent pas toujours être munies d'un organe détachable lorsque le tube a été verrouillé dans l'embout, ce qui rend quelquefois difficile le contrôle visuel du verrouillage complet du tube dans son embout.

L'invention a donc pour objet une connexion rapide d'un tube rigide susceptible d'être emmanché dans un embout. Plus précisément, l'invention vise une connexion perfectionnant les connexions connues pour améliorer le contrôle usuel du verrouillage tout en évitant d'augmenter le nombre d'éléments devant être assemblés et montés, et présentant en outre divers avantages. D'une façon générale, le tube à emmancher dans l'embout présente une portion cylindrique au moins entre son extrémité destinée à être emmanchée et un épaulement ou analogue, généralement annulaire, faisant saillie sur la surface extérieure du tube et situé à une distance déterminée de cette extrémité. De son côté, l'embout comporte, dans un logement interne approprié, un joint annulaire d'étanchéité, destiné à venir en contact avec la surface extérieure de la portion cylindrique du tube située entre son extrémité et l'épaulement. D'autre part, un organe de verrouillage du tube est monté dans l'embout et une douille est disposée dans cet embout. L'organe de verrouillage est immobilisé axialement par rapport à l'embout et est élastiquement déformable dans le sens radial entre une configuration inactive et une configuration active, dans laquelle il prend appui sur l'épaulement du tube, du côté opposé à son extrémité.

Selon l'invention la douille, dont le diamètre interne est sensiblement égal à celui du tube, est montée coulissante dans l'embout entre une première position et une deuxième position éloignée de la première vers l'intérieur de l'embout.

Cette douille présente une surface de butée disposée sur le trajet de l'épaulement du tube au cours de son emmanchement dans l'embout et assure, dans la première position, le maintien de l'organe de verrouillage dans sa configuration inactive, cependant que ledit organe est libéré lorsque la douille se trouve dans sa deuxième position.

En raison de sa simplicité, l'invention peut être mise en oeuvre sur divers types de connexion, notamment sur ceux décrits par la demande EP-A-511 891 ou faisant appel à la technique exposée dans le brevet EP-A-440 564. De toutes façons elle sera bien comprise et ses avantages apparaîtront au cours de la description qui va suivre de deux exemples de réalisation. A cet effet on se référera aux dessins annexés dans lesquels
- les figures 1 et 2 sont des vues en coupe d'une connexion selon l'invention, respectivement dans les positions avant et après montage
- Les figures 3 et 4 sont des vues en coupe, analogues aux figures 1 et 2, d'une variante de la connexion
- Les figures 5 et 6 sont des sections suivant V-V et VI-VI, respectivement des figures 3 et 4

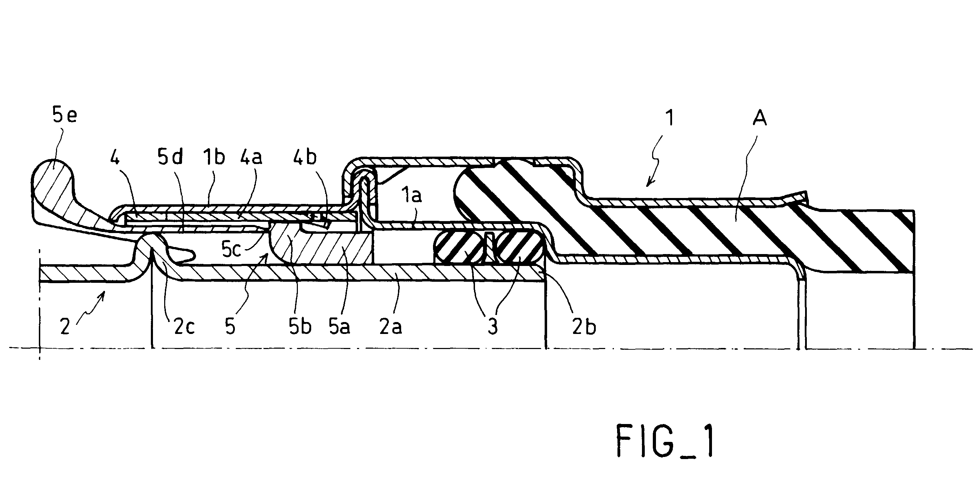

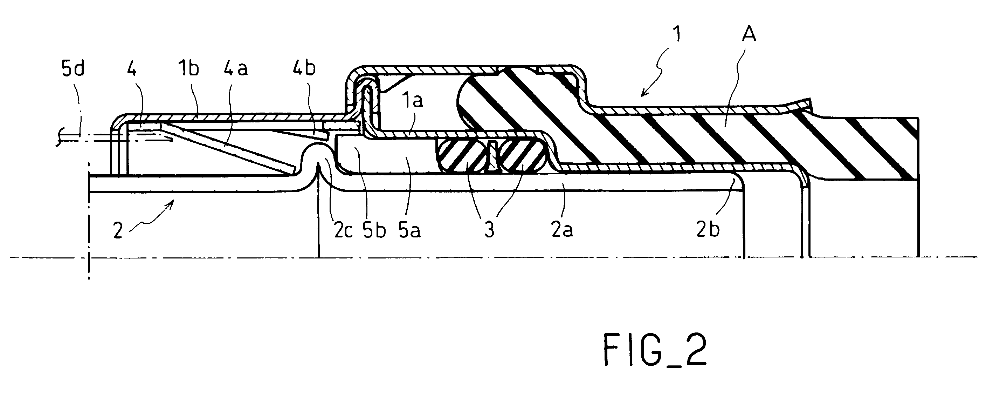

Si l'on se reporte tout d'abord aux figures 1 et 2 on voit une connexion comportant essentiellement un embout désigné par la référence générale ***1*** dans lequel un tube rigide ***2*** est susceptible d'être emmanché et verrouillé. L'embout ***1*** est monté à l'extrémité d'un tuyau souple ***A*** suivant une technique analogue à celle décrite par le brevet EP-A-511 891.

Le tube ***2*** présente une portion cylindrique ***2a*** au moins entre son extrémité ***2b*** et un épaulement ou bourrelet ***2c*** situé à une distance déterminée de cette extrémité. A l'intérieur de l'embout ***1*** est disposé, dans un logement approprié ***1a****,* au moins un joint annulaire ***3*** d'étanchéité qui, ainsi qu'on le voit sur la figure 1, peut venir en contact avec la surface extérieure de la portion cylindrique ***2a****.*

De l'autre côté de l'épaulement ***2c*** le tube ***2*** peut être raccordé, par tout moyen approprié, à un tuyau souple non représenté ou au contraire être destiné à être emmanché dans un autre embout.

Un organe de verrouillage, désigné par la référence générale ***4***, est immobilisé axialement dans l'embout ***1***, plus précisément dans la chambre définie par le prolongement cylindrique ***1b*** serti au moment de l'assemblage des divers composants de l'embout. Dans l'exemple représenté cet organe de verrouillage est constitué par un manchon présentant des découpes appropriées sur la majeure partie de sa longueur pour déterminer une pluralité de lamelles, telles que la lamelle ***4a*** visible sur la figure 2.

Le matériau du manchon possède une bonne élasticité et, dans leur état libre, les lamelles ***4a*** font saillie à l'intérieur du manchon ***4*** de sorte que leur extrémité libre est dirigée vers l'intérieur de l'embout, ainsi qu'on le voit sur la figure 2. Comme on le comprendra plus loin, il peut exister d'autre lamelles, telles que ***4b***, dont le rôle est accessoire par rapport à celui des lamelles ***4a***.

Une douille ***5***, par exemple en matière plastique, est disposée dans le manchon ***4*** où elle peut coulisser axialement. Elle possède un fût cylindrique ***5a*** et une collerette ***5b*** située du côté de l'ouverture de l'embout ***1*** par rapport au fût. Ce dernier possède un diamètre extérieur sensiblement égal au diamètre intérieur du logement ***1a*** du joint ***3*** et peut par conséquent pénétrer par coulissement dans ce logement.

Avant verrouillage du tube ***2*** dans l'embout ***1*** (FIG. 1), la douille ***5*** est liée de façon détachable, par exemple grâce à la présence d'une zone de moindre résistance ***5c***, à un prolongement ***5d*** qui s'étend à l'extérieur de l'embout, plus précisément à l'extérieur de son prolongement ***1b***, tout en dégageant l'extrémité de l'embout pour permettre l'emmanchement du tube ***2***. Ce prolongement ***5d*** présente cependant une forme appropriée telle qu'un bourrelet ***5e***, limitant son déplacement à l'intérieur de l'embout.

Dans la situation représentée sur la figure 1 la douille ***5*** se trouve dans une première position dans laquelle sa collerette ***5b*** prend appui sur l'extrémité libre des lamelles ***4a*** du manchon ***4*** qu'elle maintient ainsi dans une configuration dite inactive. Le bourrelet ***5e*** est d'autre part en appui sur l'entrée de l'embout.

Si on enfonce vigoureusement le tube ***2*** dans l'embout ***1***, le bourrelet ***2c*** vient tout d'abord prendre appui sur la collerette ***5b*** de la douille qui est alors poussée vers la droite de la figure 1 jusqu'à ce qu'elle occupe sa seconde position visible sur la figure 2.

Au cours de ce mouvement de coulissement, la collerette ***5b*** libère l'extrémité libre des lamelles ***4a*** du manchon ***4*** qui peut alors prendre sa configuration active. Ceci aura lieu lorsque le bourrelet ***2c*** aura dépassé l'extrémité libre des lamelles qui reviendront à l'état libre, formant ainsi une butée pour le bourrelet et verrouillant le tube ***2*** dans l'embout.

Simultanément l'extrémité libre du fût ***5a*** de la douille ferme le logement d'un joint d'étanchéité ***3*** qui peut être, si nécessaire, légèrement comprimé. Le tube ***2*** est alors immobilisé axialement dans l'embout.

D'autre part, le prolongement ***5d*** de la douille ***5*** s'est détaché de la collerette ***5b*** par rupture de la zone ***5c*** et est éjecté vers l'extérieur de l'embout par les lamelles ***4a***, lorsqu'elles prennent leur configuration active.

Ainsi, au simple examen visuel de la position du prolongement ***5d*** l'opérateur peut vérifier l'emmanchement complet du tube ***2*** et son verrouillage axial dans l'embout ***1***.

Après verrouillage, l'extraction du tube ***2*** hors de l'embout s'effectue en introduisant un outil approprié permettant de ramener provisoirement les lamelles ***4a*** dans leur configuration inactive. Au cours de cette opération la douille ***5*** est avantageusement maintenue dans sa seconde position (FIG. 2) par l'extrémité des lamelles ***4b*** du manchon ***4*** qui forment un butée pour la collerette ***5b***.

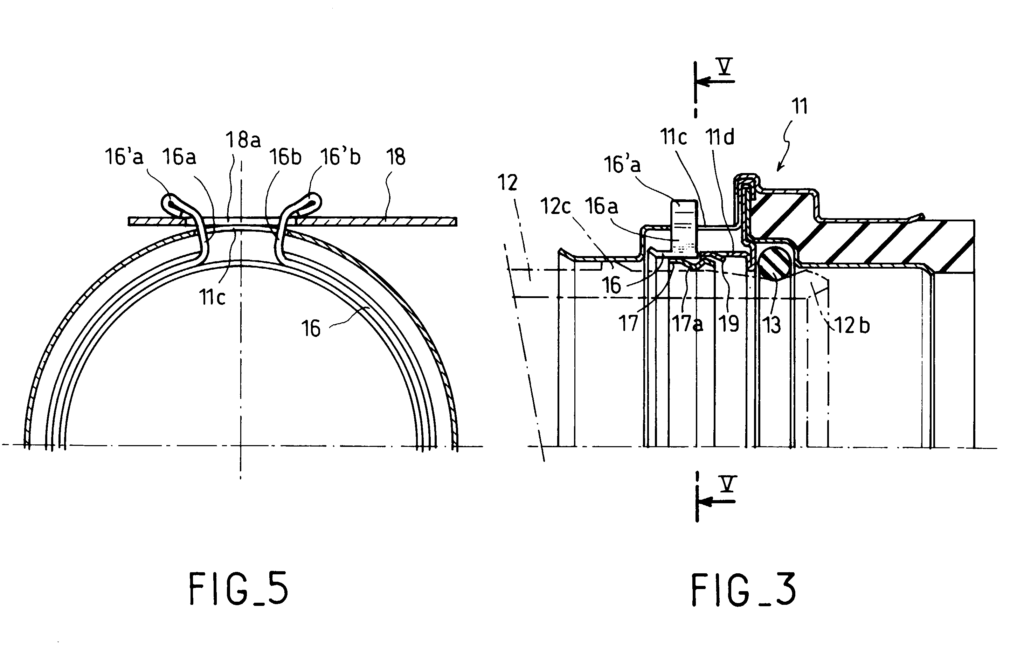

Si l'on se reporte maintenant aux figures 3 à 6 on voit un autre exemple de réalisation d'une connexion selon l'invention. Les éléments déjà décrits portent les mêmes références, augmentées de 10, que ceux des figures 1 et 2. On notera toutefois que le joint d'étanchéité ***13*** est emprisonné dans son logement limité axialement, du côté de l'entrée de l'embout, par l'un des éléments sertis ***11d*** de l'embout.

Dans cette deuxième réalisation l'organe de verrouillage du tube ***12*** est constitué par une bague élastique fendue **16**, immobilisée axialement dans l'embout, dont les branches ***16a,16b*** font saillie à l'extérieur, au travers d'une fente longitudinale ***11c*** ménagée dans l'un des éléments sertis de l'embout. Cette bague ***16*** est analogue à celle décrite dans la demande EP-A-511 891, et est susceptible de prendre appui derrière le bourrelet ***12c*** du tube, après son emmanchement.

Lors du montage de l'embout ***11***, une douille ***17*** est disposée à l'intérieur de la bague fendue ***16*** et la maintient dans sa configuration inactive (FIG. 3). En particulier, ainsi qu'on le voit sur la figure 5 les branches ***16a,16b*** des extrémités de la bague ***16*** sont écartées l'une de l'autre. Toutefois, préalablement à la mise en place de la douille ***17*** dans la bague ***16***, un témoin, constitué par une lamelle ***18*** percée d'un trou ***18a*** de forme appropriée, a été engagé sur les extrémités libres des branches ***16**a*,*16**b*** Celles-ci possèdent des plis convenables ***16'a,16'b*** qui, après écartement des branches interdisent l'enlèvement du témoin ***18***.

La section transversale de la douille ***17*** présente une ondulation ***17a*** dirigée vers l'axe de l'embout. Cette ondulation constitue, sur sa face interne, un obstacle sur le trajet axial du bourrelet ***12c*** du tube au cours de l'emmanchement ; d'autre part, sur sa face externe, elle forme un logement pour l'extrémité libre d'au moins un *"crevé"* ***19****,* disposé sur un manchon attenant à l'élément ***11d*** de l'embout, faisant saillie sur la surface intérieure de ce manchon et dirigé du côté opposé de l'entrée de l'embout.

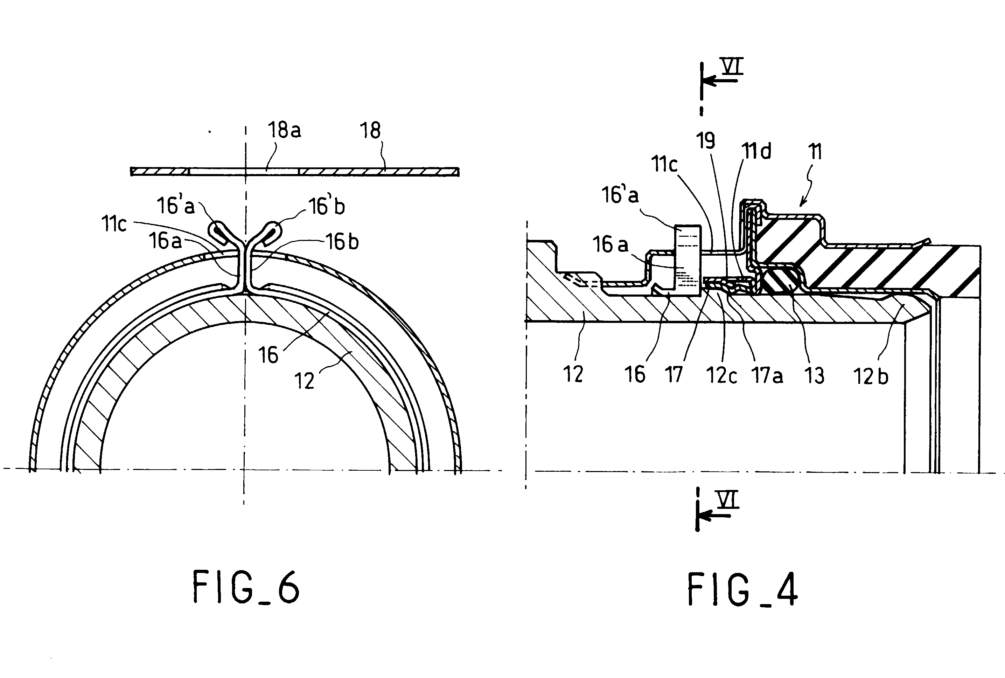

La mise en place du tube ***12*** dans l'embout ***11*** s'effectue d'une façon analogue à celle qui a été décrite plus haut. Au cours du mouvement axial du tube, le bourrelet ***12c*** vient prendre appui sur la face interne ***17a*** de la douille ***17*** qui est alors déplacée par coulissement, depuis sa première position visible sur la figure 3, jusqu'à sa deuxième position représentée à la figure 4. En quittant sa première position, la douille libère la bague fendue ***16*** qui, après le passage du bourrelet ***12c***, prendra sa configuration active derrière ce dernier, son diamètre intérieur correspondant alors au diamètre extérieur du tube ***12***.

Les branches ***16a,16b*** de la bague fendue se sont rapprochées l'une de l'autre de sorte que le témoin ***18*** les quitte facilement, les plis ***16'a,16'b*** pouvant alors passer par le trou ***18a*** Ainsi l'opérateur vérifie visuellement le verrouillage du tube ***12*** dans l'embout ***11***.

L'extraction du tube ***12*** hors de l'embout s'effectue simplement après avoir écarté les branches ***16a,16b*** avec une lame appropriée ; au cours de l'extraction du tube, la douille ***17*** est maintenue dans l'embout grâce à l'extrémité libre du *"crevé"* ***19*** prenant appui sur la face externe de l'ondulation ***17a****.*

## Revendications

1. Connexion rapide d'un tube ***(2,12)*** susceptible d'être emmanché dans un embout ***(1,11)****,* ledit tube présentant, à une distance déterminée de son extrémité ***(2b,12b)****,* un épaulement ou analogue ***(2c,12c)****,* cependant que l'embout comporte un joint annulaire d'étanchéité ***(3,13)*** destiné à venir en contact avec le tube dans la zone située entre son extrémité et l'épaulement, qu'un organe de verrouillage ***(4,16)*** du tube est monté dans l'embout et qu'une douille (5, 17) est disposée dans cet embout, ledit organe de verrouillage étant immobilisé axialement par rapport à l'embout et élastiquement déformable dans le sens radial entre une configuration inactive et une configuration active dans laquelle il prend appui sur l'épaulement du tube du côté opposé à son extrémité, caractérisée en ce que la douille ***(5,17)*** est montée coulissante dans l'embout ***(1,11)*** entre une première position et une deuxième position éloignée de la première vers l'intérieur de l'embout, ladite douille présentant une butée ***(5b,17a)*** disposée sur le trajet de l'épaulement du tube au cours de son emmanchement dans l'embout et assurant, dans sa première position, le maintien de l'organe de verrouillage ***(4,16)*** dans sa configuration inactive, cependant que, dans la seconde position de la douille, l'organe de verrouillage est libéré et le verrouillage axial du tube (2, 12) dans l'embout (1, 11) peut être vérifié visuellement.

2. Connexion rapide selon la revendication 1, caractérisée en ce que la douille ***(5)*,** de préférence en matériau plastique, est liée à un élément ***(5d)*** faisant saillie à l'extérieur de l'embout lorsque la douille est dans sa première position, ledit élément étant détachable et sa liaison avec la douille étant supprimée lorsque la douille est dans sa deuxième position.

3. Connexion rapide selon la revendication 2, caractérisée en ce qu'une zone appropriée ***(4a)*** de l'organe de verrouillage ***(4)*** prend axialement appui sur l'élément détachable ***(5d)*** de la douille lorsque ledit organe passe de sa configuration inactive à sa configuration active.

4. Connexion rapide selon la revendication 1, caractérisée en ce que, dans sa deuxième position, la face transversale intérieure ***(5a)*** de la douille prend appui, directement ou indirectement, sur le joint annulaire d'étanchéité ***(3)*** et l'emprisonne ainsi dans son logement.

5. Connexion rapide selon la revendication 1, caractérisée en ce que l'organe de verrouillage ***(16)*** présente deux branches ***(16a,16b)*** faisant saillie à l'extérieur de l'embout ***(11)***, lesdites branches étant enserrées par un témoin ***(18)*** lorsque l'organe de verrouillage est dans sa configuration inactive, et libérées dudit témoin lorsque l'organe de verrouillage est dans sa configuration active.

## Patentansprüche

1. Schnellverbindung eines in einer Muffe (1, 11) aufzunehmenden Rohres (2, 12), welches Rohr in einem bestimmten Abstand von seinem Ende (2b, 12b) eine Schulter od.dgl. (2c, 12c) aufweist, während die Muffe eine mit dem Rohr in der zwischen seinem Ende und der Schulter liegenden Zone in Kontakt zu bringende Ringdichtung (3, 13) aufweist und ein Verriegelungsorgan (4, 16) für das Rohr in der Muffe angebracht ist und eine Hülse (5, 17) in der Muffe angeordnet ist, wobei das Verriegelungsorgan gegenüber der Muffe in Achsrichtung unbeweglich und in radialer Richtung elastisch verformbar ist zwischen einer inaktiven Konfiguration und einer aktiven Konfiguration, in der es an der Schulter des Rohres auf der seinem Ende gegenüberliegenden Seite zur Auflage kommt, dadurch gekennzeichnet, daß die Hülse (5, 17) in der Muffe (1, 11) zwischen einer ersten Position und einer von der ersten gegen das Innere der Muffe zu in Abstand befindlichen zweiten Position gleitend angebracht ist, die Hülse auf dem Eindringweg der Schulter des Rohres in die Muffe einen Anschlag (5b, 17a) aufweist und in ihrer ersten Position die Beibehaltung des Verriegelungsorgans (4, 16) in seiner inaktiven Konfiguration sichert, während das Verriegelungsorgan in der zweiten Position der Hülse freigegeben wird und die axiale Verriegelung des Rohres (2, 12) in der Muffe (1, 11) visuell verifizierbar ist.

2. Schnellverbindung nach Anspruch 1, dadurch gekennzeichnet, daß die Hülse (5), die vorzugsweise aus Plastikmaterial besteht, mit einem Element (5d) verbunden ist, welches über das Äußere der Muffe vorsteht, wenn sich die Hülse in ihrer ersten Position befindet, und welches Element lösbar und seine Verbindung mit der Hülse in der zweiten Position derselben aufgehoben ist.

3. Schnellverbindung nach Anspruch 2, dadurch gekennzeichnet, daß eine geeignete Zone (4a) des Verriegelungsorgans (4) an dem lösbaren Element (5d) der Hülse axial zur Anlage kommt, wenn das Organ aus seiner inaktiven Konfiguration in seine aktive Konfiguration übergeht.

4. Schnellverbindung nach Anspruch 1, dadurch gekennzeichnet, daß die innere Querfläche (5a) der Hülse in ihrer zweiten Position direkt oder indirekt an der Ringdichtung (3) zur Anlage kommt und sie so in ihrem Sitz festhält.

5. Schnellverbindung nach Anspruch 1, dadurch gekennzeichnet, daß das Verriegelungsorgan (16) zwei über das Äußere der Muffe (11) hinausragende Pratzen (16a, 16b) aufweist, welche mittels eines Stabes (18) verspannt sind, wenn sich das Verriegelungsorgan in seiner inaktiven Kofiguration befindet, und von dem Stab freigegeben werden, wenn sich das Verriegelungsorgan in seiner aktiven Konfiguration befindet.

## Claims

1. A quick connection of a tube (2, 12) capable of being fitted in a connector (1, 11), said tube presenting, at a determined distance from its end (2b, 12b), a shoulder or the like (2c, 12c), whilst the connector comprises an O-ring (3, 13) intended to come into contact with the tube in the zone located between its end and the shoulder, a tube locking member (4, 16) is mounted in the connector and a bush (5, 17) is disposed within said connector, said locking member being axially immobilized with respect to the connector and elastically deformable in the radial direction between an inactive configuration and an active configuration in which it abuts on the shoulder of the tube opposite its end, characterized in that the bush (5, 17) is mounted to slide in the connector (1, 11) between a first position and a second position remote from the first towards the inside of the connector, said bush presenting a stop (5b, 17a) disposed on the path of the shoulder of the tube during fitting thereof in the connector and ensuring, in its first position, hold of the locking member (4, 16) in its inactive configuration, whilst, in the second position of the bush, the locking member is released and the axial locking of the tube (2, 12) in the connector (1, 11) may be checked visually.

2. The quick connection according to claim 1, characterized in that the bush (5), preferably made of plastics material, is connected to an element (5d) projecting out of the connector when the bush is in its first position, said element being detachable and its connection with the bush being eliminated when the bush is in its second position.

3. The quick connection according to claim 2, characterized in that an appropriate zone (4a) of the locking member (4) abuts axially on the detachable element (5d) of the bush when said member passes from its inactive configuration to its active configuration.

4. The quick connection according to claim 1, characterized in that, in its second position, the inner transverse face (5a) of the bush abuts, directly or indirectly, on the O-ring (3) and thus imprisons it in its housing.

5. The quick connection according to claim 1, characterized in that the locking member (16) presents two arms (16a, 16b) projecting outwardly of the connector (11), said arms being held by an indicator (18) when the locking member is in its inactive configuration, and released from said indicator when the locking member is in its active configuration.
